# EUROPÄISCHE PATENTSCHRIFT

(11) **EP 0 745 513 B1**
(45) Veröffentlichungstag und Bekanntmachung des Hinweises auf die Patenterteilung: **05.09.2001**
(21) Anmeldenummer: 96102948.5
(22) Anmeldetag: 28.02.1996
(51) Int. Cl.: B60R 5/00

(54) **Transportvorrichtung mit einem sackartigen Behälter für langgestrecktes Ladegut, wie z.B. für Skier**
Transport device with a bag for elongate material, e.g. for skis
Dispositif de transport avec un sac pour matériau allongé, p.e. pour skis

(30) Priorität: 31.05.1995 DE 19519258
(43) Veröffentlichungstag der Anmeldung: 04.12.1996
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE); Rath, Thomas, 42697 Solingen (DE)
(74) Vertreter: Patentanwälte Ostriga & Sonnet

(56) Entgegenhaltungen:
- DE-U- 29 508 597
- GB-A- 1 004 398
- US-A- 4 196 762
- US-A- 4 815 509

## Beschreibung

Die Erfindung betrifft eine Transportvorrichtung entsprechend dem Oberbegriff des Anspruchs 1. Derartige Transportvorrichtungen sind durch offenkundige Vorbenutzung bekanntgeworden. Auch ist eine derartige Transportvorrichtung in der DE 94 17 440 U1 allgemein beschrieben.

In der DE 94 17 440 U1 ist indessen die Konfektionierung des sackartigen Behälters nicht beschrieben. Üblich ist es bislang, die textile Gewebebahn, aus welcher der Skisack genäht ist, in Leinwandbindung, z.B. aus Polyamid-Faser, auszuführen. Da derartige Transportvorrichtungen häufig zur Aufnahme von Skiern bestimmt sind, an denen nach ihrer Verwendung noch Schnee- und Eisreste anhaften, muß der sackartige Behälter hinreichend wasserdicht sein. Um dies zu erreichen, ist die Gewebebahn des sackartigen Behälters innen und außen mit einer PVC-Schicht versehen, welche den Vorteil bietet, seitlich neben den Einstichen einer Naht eine streifenartige Nahtabdichtungszone in Form einer Schweißnaht durch Aufschmelzen der PVC-Beschichtung anbringen zu können. Der bekannte sackartige Behälter weist zunächst Fügenähte auf, welche der Verbindung von zwei Geweberändern dienen, deren zusammengenähte freie Randbereiche eine sogenannte Nähfahne bilden.

Außerdem ist der bekannte sackartige Behälter mit Nähten, die keine Nähfahne bilden, versehen, welche lediglich sogenannte Abnäher darstellen. Derartige Abnäher dienen dem Benutzer als Falthilfe, um den sackartigen Behälter bei Nichtgebrauch gezielt auf ein bestimmtes Packmaß zusammenlegen zu können. Sowohl Fügenähte als auch die als Falthilfen dienenden Abnäher werden beim bekannten sackartigen Behälter mittels streifenartiger Nahtabdichtungszonen in Form der vorerwähnten Schweißnähte gegen ein Durchdringen von Wasser gesichert.

Der textile Anteil der Gewebebahn, aus welcher der bekannte sackartige Behälter gefertigt ist, hat ein Flächengewicht von etwa 100 g. Ein beidseitige Beschichtung mit PVC führt indes zu einem Flächengewicht von 250 g. Die wegen ihrer Schweißfähigkeit und wegen ihrer Wasserdichtheit an sich vorteilhafte PVC-beschichtete Gewebebahn ist jedoch recht unflexibel und steif, unterliegt darüber hinaus im Winterbetrieb einer Kälteversteifung, ist also recht unbequem einfaltbar und nur entgegen einen verhältnismäßig großen mechanischen Widerstand in ein geringes Stauvolumen überzuführen. Ein möglichst geringes Stauvolumen ist wichtig, weil die gesamte Transportvorrichtung häufig im Innenraum einer Fondsitzlehne Platz finden muß.

Ausgehend von der eingangs erwähnten, durch offenkundige Vorbenutzung bekanntgewordenen Transportvorrichtung, wie sie allgemein auch in der DE 94 17 440 U1 beschrieben ist, liegt der Erfindung die Aufgabe zugrunde, die bekannte Transportvorrichtung so zu verbessern, daß deren sackartiger Behälter bei Gewährleistung einer hinreichenden Wasserdichtheit auf ein geringeres Stauvolumen und außerdem mit geringer mechanischer Kraft zusammenlegbar ist.

Entsprechend der Erfindung wird diese Aufgabe dadurch gelöst, daß die streifenartigen Nahtabdichtungszonen des sackartigen Behälters von auf die Gewebebahn aufgeschweißten, die jeweilige Naht überdeckenden, Nahtabdichtungsbändern gebildet sind, daß die Gewebebahn unbeschichtet ist, und daß die Mittel gegen Durchdringen von Wasser von einer Imprägnierung der Gewebebahn gebildet sind.

Entsprechend der Erfindung werden zunächst die Nahteinstiche mittels Nahtabdichtungsbänder gegen ein Durchdringen von Wasser gesichert. Derartige Nahtabdichtungsbänder sind an sich bekannt. Deren Verarbeitung ist beispielsweise in einem Prospekt "Das Schweißmaschinen-Programm von Pfaff die Vielseitige " der G.M. PFAFF Aktiengesellschaft D-67655 Kaiserslautern, beschrieben. Die thermische Anbringung solcher Nahtabdichtungsbänder geschieht zeitgleich mit dem eigentlichen Nähvorgang mittels Heißluft-, Heizkeil- oder Ultraschall-Beaufschlagung. Die Nahtabdichtungsbänder fallen beim erfindungsgemäßen sackartigen Behälter kaum ins Gewicht, so daß sich dieser mit einem Flächengewicht von etwa 100 g seiner Gewebebahn begnügen kann.

Anstelle einer eine Wiederverwertbarkeit erschwerenden PVC-Beschichtung des bekannten sackartigen Behälters ist die Gewebebahn des erfindungsgemäßen sackartigen Behälters nur mittels einer Imprägnierung gegen Durchdringen von Wasser gesichert. Eine solche Imprägnierung der Gewebebahn kann durch die verschiedenen Imprägnierungsarten, beispielsweise durch Tränken, z.B. mit Fluor-Carbon-Flüssigkeit, geschehen. Ein Imprägnierungsmittel ist z.B. unter der Bezeichnung "SCOTCH-GARD" der Firma 3M bekanntgeworden.

Die unbeschichtete Gewebebahn des erfindungsgemäßen sackartigen Behälters gestattet bei geringem Flächengewicht darüber hinaus eine Verbesserung der Festigkeit der Gewebebahn. Und zwar wurde festgestellt, daß die PVC-Beschichtung beim bekannten sackartigen Behälter die bindungsbedingten textilen Festigkeitseigenschaften einer Gewebebahn in nachteiliger Weise blockiert und so zu einer Verringerung der Festigkeitswerte führt.

Der sackartige Behälter der erfindungsgemäßen Transportvorrichtung ist außerdem vorteilhaft, weil er wegen seines geringen Flächengewichts mit einem geringen mechanischem Kraftaufwand bis auf ein geringes Stauvolumen reduziert werden kann.

Im Unterschied zur eingangs beschriebenen bekannten Transportvorrichtung mit einem beidseitig PVC-beschichteten sackartigen Behälter, welcher zwingend unter Zuhilfenahme von Falthilfen in Form von zusätzlichen Nähten gezielt zusammengelegt werden muß, um ein möglichst geringes Packmaß zu erreichen, benötigt der erfindungsgemäße sackartige Behälter in weiterer Ausgestaltung der Erfindung derartige Falthilfen regelmäßig nicht, weil er aufgrund des geringen Flächengewichts seiner Gewebebahn auch ziellos auf ein ausreichend kleines Packmaß reduziert werden kann. Ein Wegfall von Zusatznähten senkt zudem die Herstellungskosten erheblich. Einer weiteren Herabsetzung des Herstellungsaufwands dient auch, daß bei der Fertigung des erfindungsgemäßen sackartigen Behälters wesentlich weniger Kosten erfordernde Standardmaschinen einsetzbar sind, zumal die beim Bekannten erforderlichen individuell anzupassenden Schweißbearbeitungs-vorrichtungen entfallen können.

In den Zeichnungen sind bevorzugte Ausführungsbeispiele entsprechend der Erfindung näher dargestellt, es zeigt
Fig. 1 eine schematische räumliche Darstellung einer Transportvorrichtung für langgestrecktes Ladegut, und zwar für Skier,
Fig. 2 einen Querschnitt durch den aus Fig. 1 ersichtlichen sackartigen Behälter entsprechend der mit II-II angegebenen Schnittbezeichnung,
Fig. 3-6 in schematischer Darstellung verschiedene Nahtquerschnitte, im Vergleich zu Fig. 2 vergrößert, entsprechend den in Fig. 2 mit III, IV, V und VI bezeichneten Einkreisungen und
Fig. 7 den Querschnitt durch eine Fügenaht.

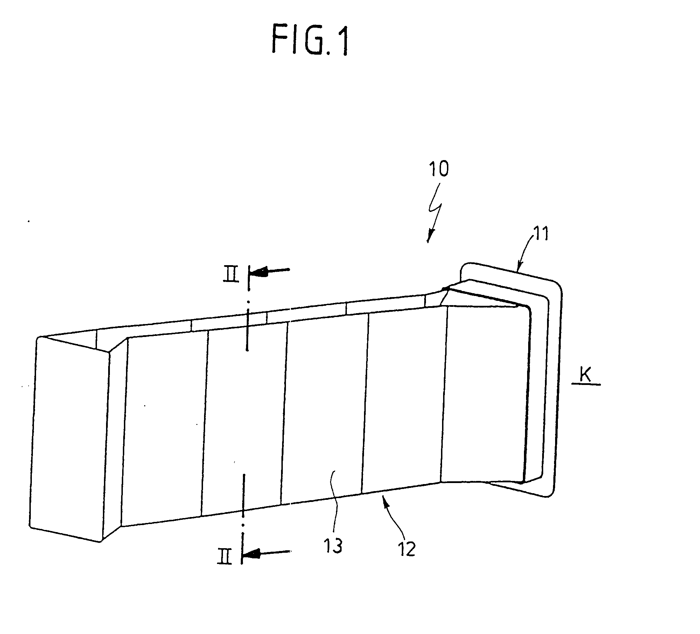

In Fig. 1 ist eine Transportvorrichtung, auch unter dem Namen Skisack bekannt, insgesamt mit der Bezugsziffer 10 bezeichnet.

Die Transportvorrichtung 10 weist ein Rahmengehäuse 11 auf, welches zur Aufnahme eines aus einer textilen Gewebebahn 13 gefertigten sackartigen Behälters 12 bestimmt ist.

Das Rahmengehäuse 11 kann beispielsweise im Innenraum einer Fondsitzlehne angeordnet und bei ausgeklappter Mittelarmlehne zugänglich sein. Die Kofferraumseite ist in Fig. 1 mit K gekennzeichnet.

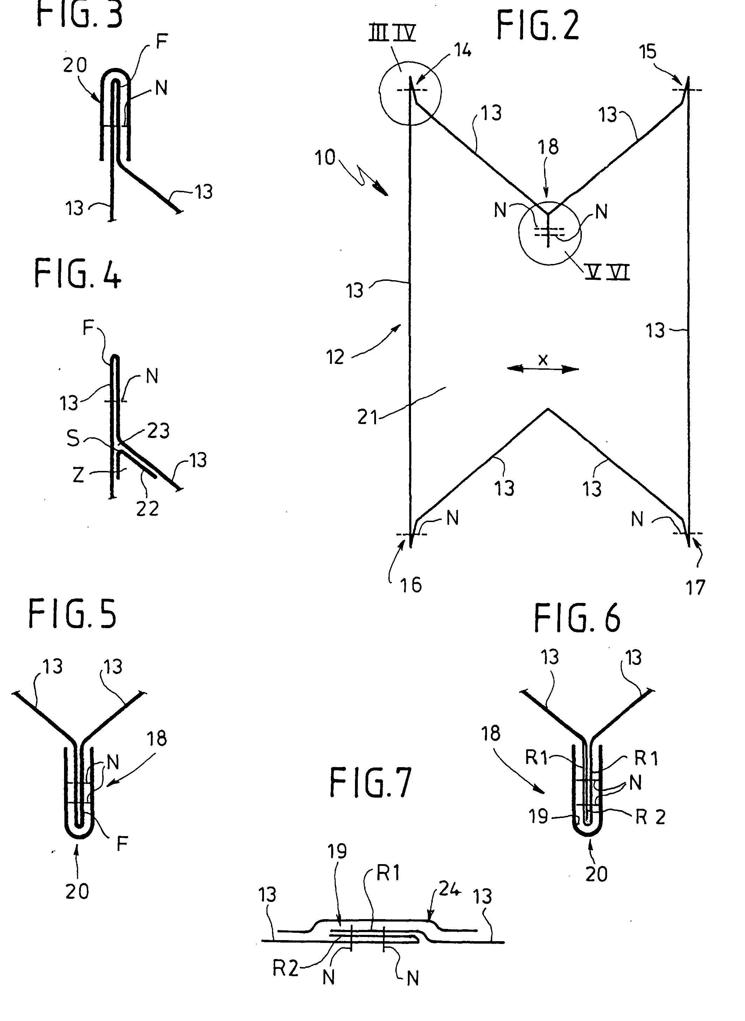

Bei Betrachtung des in Fig. 2 dargestellten Querschnittes durch den sackartigen Behälter 12 ist vorstellbar, daß dieser entlang dem Doppelpfeil x quer auseinanderziehbar ist, um so seinen maximalen rechteckigen Aufnahmequerschnitt zu erhalten.

Ebenso wie in Fig. 2 sind auch in den Fig. 3-6 die Nähte N mit Strichlinien gekennzeichnet. Bei den Nahtbereichen 14, 15, 16, 17 handelt es sich um sogenannte Abnäher, d.h. um Nahtbereiche, bei denen die Gewebebahn 13 lediglich eine durch die Naht N fixierte Falte F bildet.

Für den Fall, daß der Nahtbereich 18 als Fügenaht bzw. als Verbindungsnaht ausgebildet sein soll, träfe Fig. 6 zu. In diesem Falle wäre ein im Querschnitt durchgehender Randbereich R1 um einen Randbereich R2 herumgeschlagen und mittels zweier Nähte N vernäht, so daß eine Kappnaht entsteht.

Für den Fall, daß der Nahtbereich 18 in Form eines Abnähers als Falthilfe ausgebildet ist, ergibt sich Fig. 5, wonach, ebenso wie bei den Fig. 3 und 4, eine durchgehende Falte F mittels einer Naht N fixiert ist.

Fig. 7 zeigt eine sogenannte Englische Naht, eine Kappnaht für relativ schwere Belastungen, bei welcher die aus zwei miteinander verbundenen freien Randbereichen R1 und R2 bestehende Nähfahne 19 an die übrige benachbarte Gewebebahn 13 einseitig angelegt und dort mittels zweier Nähte N vernäht ist.

Entsprechend den Fig. 3, 5 und 6 sind im Querschnitt U-förmige Nahtabdichtungsbänder 20 gewissermaßen über die jeweiligen Nahtbereiche gestülpt und dort durch Schmelzklebung mit der Oberfläche der Gewebebahn 13 verbunden. Auf diese Weise sind die Einstiche der Naht N gegen Wasserdurchtritt gesichert. Die Gewebebahn 13 selbst ist wasserdicht imprägniert, z.B. in einem Fluor-Carbon-Bad.

Gemäß den Fig. 5 und 6 sind die im Querschnitt U-förmigen Nahtabdichtungsbänder 20 im Innenraum 21 des sackartigen Behälters 12 angeordnet, während die U-förmigen Nahtabdichtungsbänder 20 an den Nahtbereichen 14, 15, 16 und 17 außen am sackartigen Behälter 12 vorgesehen sind.

Gemäß Fig. 4 ist als alternative Abdichtung eines Abnähers (beispielsweise des Nahtbereichs 14) innen in einem Zwickel Z ein im Querschnitt V-förmiges Nahtabdichtungsband 22 mit der Gewebebahn 13 verschweißt. Hierbei weist die Scheitellinie S des im Querschnitt V-förmigen Nahtabdichtungsbandes 22 in die Verengung 23 des zwickelförmigen Bereichs Z hinein. Gemäß Fig. 7 ist ein die Fügenaht überbrückendes, im Querschnitt etwa Ω-förmiges Nahtabdichtungsband 24 auf die Gewebebahn 13 aufgeschweißt.

Die Gewebebahn 13 besteht z.B. aus Polyamid, beispielsweise aus Nylon, und kann in Leinenbindung mit einer Gewebesicherung (rip-stop) ausgeführt sein.

## Patentansprüche

1. Transportvorrichtung (10), wie z.B. für Personen- oder Kombinationskraftwagen, mit einem zu einem Stauvolumen verkleinerbaren, aus einer textilen Gewebebahn (13) gefertigten, zusammenlegbaren sackartigen Behälter (12) für langgetrecktes Ladegut, wie z.B. für Skier, und mit einem das Behälter-Stauvolumen mindestens teilweise aufnehmenden, einen Durchladekanal umschließenden Rahmengehäuse (11), wobei der sackartige Behälter (12) Nähte (N) aufweist, denen streifenartige Nahtabdichtungszonen (20, 22, 24) benachbart zugeordnet sind, und wobei die Gewebebahn (13) Abdichtungsmittel gegen ein Durchdringen von Wasser besitzt, **dadurch gekennzeichnet**, daß die streifenartigen Nahtabdichtungszonen des sackartigen Behälters (12) von auf die Gewebebahn (13) aufgeschweißten, die jeweilige Naht überdeckenden Nahtabdichtungsbändern (20, 22, 24) gebildet sind, daß die Gewebebahn (13) unbeschichtet ist, und daß die Mittel gegen Durchdringen von Wasser von einer Imprägnierung der Gewebebahn (13) gebildet sind.

2. Transportvorrichtung nach Anspruch 1, **dadurch gekennzeichnet**, daß das Nahtabdichtungsband (20) um den Nahtbereich (N) und um die sich an den Nahtbereich (N) anschließende Nähfahne (19) oder Nähfalte (F) herumgefaltet und beidseitig der Naht (N) mit der textilen Bahn (13) verschweißt ist.

3. Transportvorrichtung nach Anspruch 1, **dadurch gekennzeichnet**, daß innenseitig des sackartigen Behälters (12) in den der Naht (N) benachbarten Zwickelbereich (Z) ein im Querschnitt etwa V-förmiges, mit seiner Scheitellinie (S) in die Verengung (23) des zwickelförmigen Bereichs (Z) hineinweisendes Nahtabdichtungsband (22) eingeschweißt ist.

4. Transportvorrichtung nach einem der Ansprüche 1 bis 3, **dadurch gekennzeichnet**, daß bei einer zwei Ränder (R1, R2) der Gewebebahn (13) miteinander verbindenden Fügenaht (N), wie z.B. Kappnaht, ein die Fügenaht (N) überbrückendes, im Querschnitt etwa Ω-förmiges Nahtabdichtungsband (24) auf die Gewebebahn (13) aufgeschweißt ist

5. Transportvorrichtung nach einem der Ansprüche 1 bis 4, **dadurch gekennzeichnet**, daß der sackartige Behälter (12) unter Ausschluß von der Falthilfe dienenden Nähten (N) nur mindestens eine Fügenaht (N) aufweist.

## Claims

1. A transportation device (10), for example for passenger cars or combination motor vehicles, with a collapsible sack-like container (12) for elongated loads, for example for skis, which container can be reduced in size to a storage volume and is manufactured from a textile fabric web (13), and with a frame housing (11) at least partially accommodating the container storage volume and enclosing a through loading duct, the sack-like container (12) comprising seams (N), with which strip-like seam sealing zones (20, 22, 24) are associated, and the fabric web (13) comprising sealing means for sealing against water penetration, **characterised in that** the strip-like seam sealing zones of the sack-like container (12) are formed by seam sealing tapes (20, 22, 24) welded onto the fabric web (13) and covering the respective seam, the fabric web (13) is uncoated, and the means sealing against water penetration is formed by an impregnation of the fabric web (13).

2. A transportation device according to claim 1, **characterised in that** the seam sealing tape (20) is folded around the seam region (N) and around the sewing lug (19) or sewing fold (F) adjoining the seam region (N) and is welded to the textile web (13) on either side of the seam (N).

3. A transportation device according to claim 1, **characterised in that** a seam sealing tape (22) having an approximately V-shaped cross section with its zenithal line (S) pointing into the narrow section (23) of the wedge-shaped region (Z) is welded into the wedge region (Z) adjacent the seam (N) on the inside of the sack-like container (12).

4. A transportation device according to one of claims 1 to 3, **characterised in that**, in the case of a joining seam (N), such as an overlapping seam, for example, connecting two edges (R1, R2) of the fabric web (13) with one another, a seam sealing tape (24) having an approximately Ω-shaped cross section and bridging the joining seam (N) is welded onto the fabric web (13).

5. A transportation device according to one of claims 1 to 4, **characterised in that**, apart from seams (N) acting as folding aids, the sack-like container (12) comprises only at least one joining seam (N).

## Revendications

1. Dispositif de transport (10), tel que par exemple pour des voitures personnelles ou commerciales, avec un récipient (12) du type d'un sac, susceptible d'être replié, fabriqué en une bande de tissu (13) textile, le récipient étant prévu pour un produit à charger de forme allongée, tel que par exemple pour des skis, et avec un boîtier de cadre (11), entourant un canal de passage de charge, recevant au moins partiellement le volume de rangement du récipient, le récipient (12) du genre d'un sac présentant des coutures (N) auxquelles sont associées de façon voisine des zones d'étanchéité de couture (20, 22, 24) du type de bandes, et la bande de tissu (13) comportant des moyens d'étanchéité pour empêcher toute pénétration d'eau, caractérisé par le fait que les zones d'étanchéité de couture, du type de bandes, du récipient (12) du genre d'un sac sont formées par des bandes d'étanchéité de couture (20, 22, 24) recouvrant la couture respective, appliquées par soudage sur la bande de tissu (13), par le fait que la bande de tissu (13) ne porte pas de revêtement, et par le fait que les moyens prévus pour empêcher toute pénétration d'eau sont formés par une imprégnation de la bande de tissu (13).

2. Dispositif de transport selon la revendication 1, caractérisé par le fait que la bande d'étanchéité de couture (20) est repliée autour de la zone de couture (N) et autour des pattes de couture (19) se raccordant à la zone de couture (N), ou autour de plis de couture (F), et'soudée à la bande textile (13), des deux côtés de la couture (N)

3. Dispositif de transport selon la revendication 1, caractérisé par le fait que, intérieurement au récipient (12) du genre d'un sac, dans la zone de gousset (Z) voisine de la couture (N), est soudée une bande d'étanchéité de couture (22), dont la section transversale est à peu près en forme de V et qui s'insère, par sa ligne de sommet (S), dans le rétrécissement (23) de la zone (Z) en forme de gousset.

4. Dispositif de transport selon l'une des revendications 1 à 3, caractérisé par le fait que, dans le cas d'une couture de jointoiement (N), reliant ensemble deux bords (R1, R2) de la bande de tissu (13), telle que par exemple une couture rabattue, une bande d'étanchéité de couture (24) à section transversale à peu près en forme de Ω, pontant la couture de jointoiement (N), est appliquée par soudure sur la bande de tissu (13).

5. Dispositif de transport selon l'une des revendications 1 à 4, caractérisé par le fait que le récipient (12) du genre d'un sac présente uniquement au moins une couture de jointoiement (N), à l'exclusion des coutures (N) servant d'aide au pliage.
